# EUROPEAN PATENT SPECIFICATION

(11) **EP 3 259 442 B1**
(45) Date of publication and mention of the grant of the patent: **17.06.2020**
(21) Application number: 16702740.8
(22) Date of filing: 04.02.2016
(51) Int. Cl.: E21B 43/01, E21B 47/12, H02H 1/06

(54) **RETROFIT POWER SWITCHING AND REPEATING MODULE**
NACHRÜSTBARE LEISTUNGSSCHALTUNG UND VERSTÄRKERMODUL
MODULE MODERNE DE RÉPÉTITION ET DE COMMUTATION DE COURANT

(30) Priority: 16.02.2015 GB 201502566
(43) Date of publication of application: 27.12.2017
(73) Proprietor: GE Oil & Gas UK Limited, Nailsea Bristol BS48 1BS (GB)
(72) Inventor: STONE, Matthew Edmund, Nailsea Bristol BS48 1BS (GB)
(74) Representative: BRP Renaud & Partner mbB Rechtsanwälte Patentanwälte Steuerberater
(86) International application number: PCT/EP2016/052332
(87) International publication number: WO 2016/131660

(56) References cited:
- EP-A2- 2 293 424
- WO-A2-2010/066898
- CN-A- 103 341 466
- US-A1- 2014 003 760

## Description

This invention relates to a power switching module, for example, for use in a subsea system. The invention also relates to a method of retrofitting a subsea system with a power switching module.

### BACKGROUND

In subsea systems, such as those used for operating an underwater hydrocarbon extraction facility, it is often desirable to switch power on and off to specific components in the system. In existing fields, the subsea equipment may have been deployed without the capability of power switching individual components. The removal and redeployment of subsea systems is a complex and time-consuming procedure, and often cannot be economically justified on fields approaching the end of their useful lifespan. As these assets age, it may become useful to be able to isolate individual areas of the system for retrieval and rework. Therefore, it would be useful to be able to retrofit power switching and repeating solutions into existing subsea systems (for example, using a remotely operated underwater vehicle or an autonomous underwater vehicle). This philosophy can extend to adding other new features of the system, supported by the retro-insertion technologies mentioned in this document.

From EP 2 293 424 A2 an AC power switching module designed for use in an underwater facility is known. The power switching module comprises switches (thyristors) that are arranged in a first AC line and in a second AC line. The switches are switchable by a pulse generator. The pulse generator is controlled by a control logic component. The control logic component receives a primary control input from an opto-isolator and a secondary control input from an AC current-dependent circuit.

### SUMMARY OF THE INVENTION

The present invention is defined in the accompanying claims.

In accordance with a first aspect of the present invention there is provided a power switching module, the power switching module comprising: a plurality of input interfaces; a plurality of output interfaces; a plurality of switches connected between respective ones of the input interfaces and output interfaces; and a controller operable to selectively open and close the switches, wherein the power switching module is received in a marinised canister.

In accordance with a second aspect of the present invention there is provided a method of retrofitting a subsea system, said subsea system comprising a plurality of power lines connected to respective powered components of the subsea system, with a power switching module, said module being received in a marinised canister and comprising a plurality of input interfaces, a plurality of output interfaces, a plurality of switches connected between respective ones of the input interfaces and the output interfaces, and a controller operable to selectively open and close the switches, the method comprising the steps of:
i) disconnecting the plurality of power lines from their respective components;
ii) connecting the plurality of power lines to respective ones of the input interfaces; and
iii) providing a plurality of power lines between respective ones of the output interfaces and the components of the subsea system.

The controller is connected to at least one of i) a communications input interface and a communications output interface for a dedicated communications line and ii) in electrical communication with the plurality of input interfaces and the plurality of output interfaces. The controller could be configured to at least one of i) receive a control signal from the communications input interface and ii) to receive a control signal from one of the input interfaces.

The control signal could optionally be a communication on power signal.

The control signal could optionally be a modulated power signal. In this case, the modulated power signal could be a pulsed frequency signal or a pulsed phase signal.

The power switching module could be retrofitted into a subsea system, which could optionally form part of a subsea hydrocarbon extraction facility.

### DETAILED DESCRIPTION

The invention will now be described by way of example with reference to the accompanying drawings, in which:
Fig. 1 schematically shows a power switching module according to a first embodiment of the invention;
Fig. 2 schematically shows a power switching module according to a second embodiment of the invention; and
Fig. 3 schematically shows a power switching module according to a third embodiment of the invention.

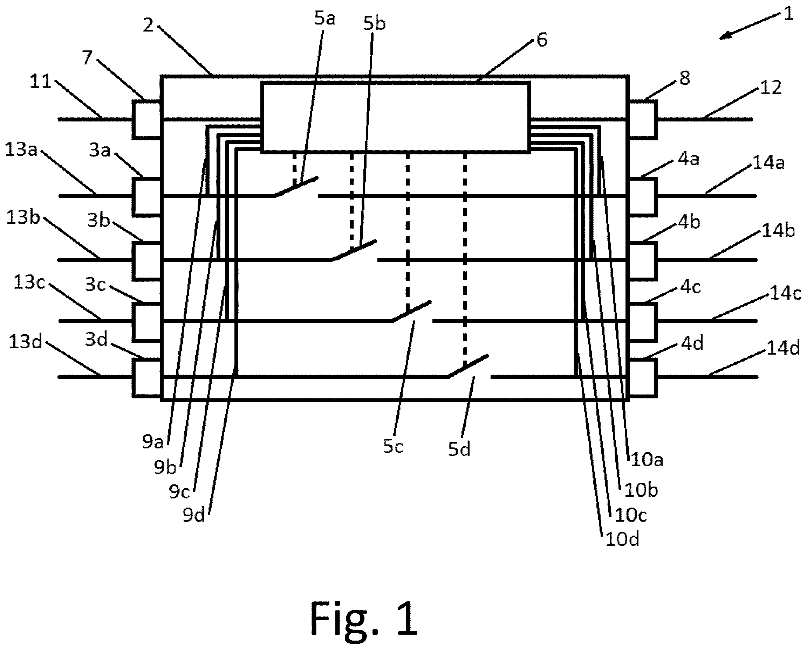

Fig. 1 schematically shows a power switching module 1 according a first embodiment of the invention.

The power switching module 1 comprises a canister 2 which contains switching technology. The canister 2 is a marinised canister, i.e. it is watertight and ruggedized to ensure a long lifespan in a harsh underwater environment. A first side of the canister 2 comprises a plurality of input interfaces 3a, 3b, 3c and 3d. The canister 2 further comprises a plurality of corresponding output interfaces 4a, 4b, 4c and 4d on an opposite side to the first side. A plurality of switches 5a, 5b, 5c and 5d are connected between respective ones of the input interfaces and output interfaces.

The power switching module 1 further comprises a controller 6 which is operable to selectively open and close each of the switches 5a-d. The power switching module 1 further comprises a communications input interface 7 and a communications output interface 8, each in electrical communication with the controller 6. If a subsea system includes a dedicated communications line 11, this can be attached to the communications input interface 7 as shown. The controller 6 can then receive a control signal from the communications input interface 7 which controls which of the switchable electrical connectors 5a-d are to be connected / disconnected. The controller 6 can pass any communications signals received at the communications input interface 7 to the output interface 8 for further dissemination to other components in the subsea system via a further communications line 12. However, communications output interface 8 may be omitted entirely if the dedicated communications line 11 is a spare communications line in the system, or if the communications signals received are not required by any components downstream of the power switching module 1.

The controller 6 is in electrical communication with each of the input interfaces 3a-d via electrical connectors 9a, 9b, 9c and 9d, and with each of the output interfaces 4a-d via electrical connectors 10a, 10b, 10c and 10d. If the subsea system does not include a dedicated communications line 11 as shown, the controller 6 can receive a control signal from the one of the power lines connected to the input interfaces 3a-d. Various methodologies may be used to transmit a control signal over a power line. For example, a communication on power signal (COPS) may be used. Alternatively, the power signal may be modulated, e.g. the frequency or phase of the power signal may be pulsed using a modulator located at the power source. Said power source may be located topside, or at a subsea facility.

In Fig. 1 it is assumed that the power switching module 1 is incorporated into a subsea system, i.e. with a retrofit operation having already been performed. In this state, a plurality of power lines 13a, 13b, 13c and 13d from a subsea cable termination assembly (for example, an umbilical termination assembly) have been disconnected from their respective components of the subsea system and connected to each of the input interfaces 3a-d. New power lines 14a, 14b, 14c and 14d are attached between the output interfaces 4a-d which connect the power switching module 1 to components of a subsea system (for example, a hydrocarbon production system), to which the power lines of the cable termination assembly were attached prior to the retrofit operation being performed.

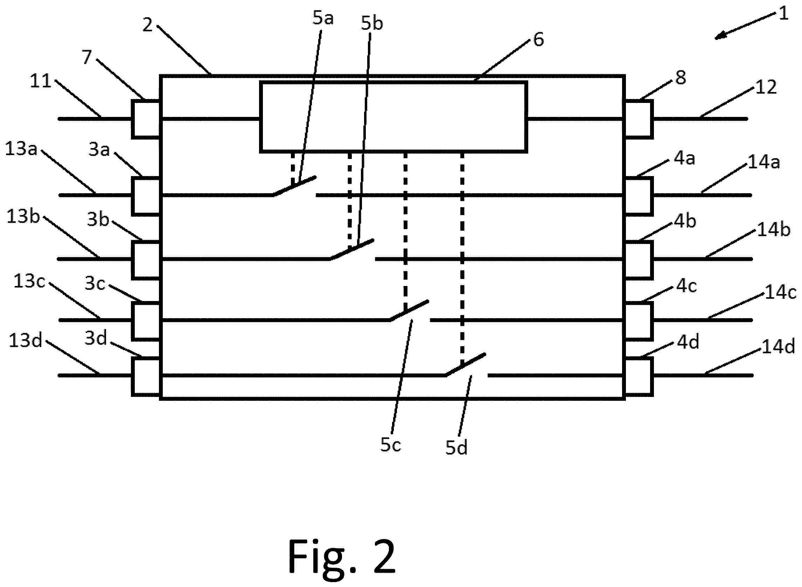

Fig. 2 schematically shows a power switching module 1 according to a second embodiment of the invention. Like reference numerals from Fig. 1 have been retained as appropriate.

The power switching module 1 shown in Fig. 2 is identical to that of Fig. 1, except that the electrical connectors 9a-d and 10a-d have been removed. In situations where it is known that there is a dedicated communications line 11, these electrical connectors can be omitted from the canister 2 resulting in a simplified power switching module.

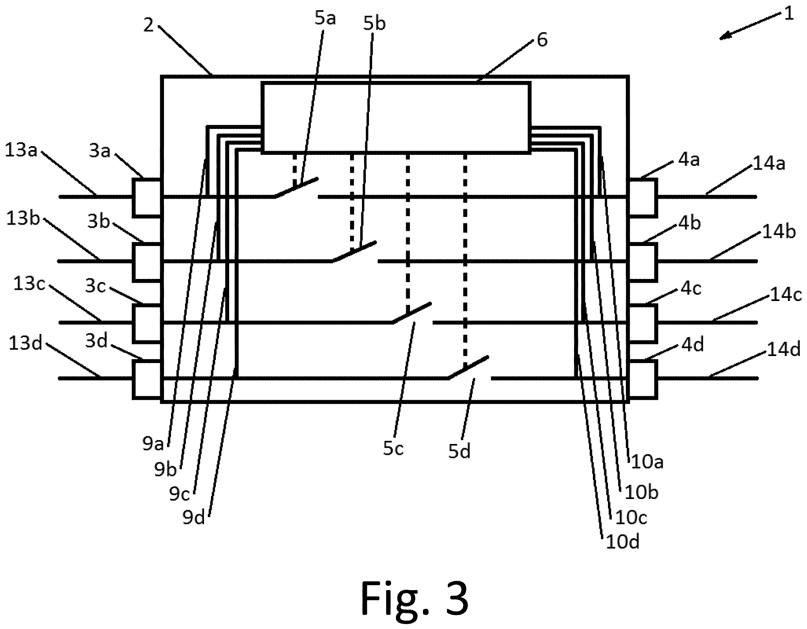

Fig. 3 schematically shows a power switching module 1 according to a third embodiment of the invention. Like reference numerals from Fig. 1 have been retained as appropriate.

The power switching module 1 shown in Fig. 3 is identical to that of Fig. 1, except that the communications input interface 7 and the communications output interface 8, and the electrical connections between the controller 6 and the communications input and output interfaces 7 and 8, have been removed. In situations where it is known that the subsea system to be retrofitted includes no dedicated communications line, these interfaces and electrical connections can be omitted from the canister 2 resulting in a simplified power switching module.

The embodiment shown in Fig. 1 is generally the preferred embodiment of the invention, as it can be retrofitted into subsea systems that include a dedicated communications line, and also into subsea systems that do not include a dedicated communications line. When the embodiment shown in Fig. 1 is used in a subsea systems that includes a dedicated communications line, the electrical connectors 9a-d and 10a-d can still act to provide an emergency back-up means of communicating with the controller 6 in the event that communications input interface 7 or the dedicated communications line 11 fails.

### ADVANTAGES OF THE INVENTION

There are numerous advantages associated with the present invention. For example, the power switching module can be retrofitted into a legacy subsea installation to provide individual line isolation. This can provide more detailed control of a subsea installation in situations where the existing system only has the ability to disconnect the power supply to entire installation, and not individual components thereof.

The invention is not limited to the specific embodiments disclosed above, and other possibilities will be apparent to those skilled in the art.

For example, while a single controller is shown in the embodiments of Figs. 1 to 3, the power switching module could comprise respective discrete controllers for each power line, or a linked set of controllers.

Additionally, while the embodiments of Figs. 1 to 3 show four input interfaces and four output interfaces, any number of input and output interfaces may be used in practice.

Additionally, while the communications input and output interfaces are described as being electrically connected to the controller, the use of other methods of transmitting the control signal are not precluded, and fall within the scope of the invention. For example, the dedicated communications line could be an optical fibre, and the communications input / output interfaces could be in optical communication with the controller. Alternatively, an optical signal being received at the communications input interface could be converted to an electrical signal using an electrical - optical data converter (EODC). This electrical signal could be converted back into an optical signal using an EODC at the communications output interface for further transmission to components of a subsea system.

In embodiments of the invention where there is a dedicated communications line, the power switching module could optionally become a new node of the subsea system. This would be particularly useful if it proved desirable to deploy sensors in the power switching module, for example, temperature sensors to monitor any active electronics within the module. This would also be useful if it proved desirable to deploy power line conditioning and monitoring technologies within the module, for example, insulation resistance monitoring means, in a single combined retrofit package. Alternatively, the power switching module could optionally remain 'transparent' to the system, merely acting as a repeater for communications signals to and from the components of the subsea system.

## Claims

1. A power switching module (1), the power switching module (1) comprising:
a plurality of input interfaces (3a - 3d);
a plurality of output interfaces (4a - 4d);
a plurality of switches (5 a - 5d) connected between respective ones of the input interfaces (3a - 3d) and output interfaces (4a - 4d); and
a controller (6) operable to selectively open and close the switches (5a - 5d),
**characterised in that** the controller (6) is at least one of i) connected to a communications input interface (7) and a communications output interface (8) for a dedicated communications line (11) and ii) in electrical communication with the plurality of input interfaces (3a - 3d) and the plurality of output interfaces (4a - 4d),
wherein the power switching module (1) is received in a marinised canister.

2. The power switching module (1) according to claim 1, wherein the controller (6) is configured to receive a control signal from the communications input interface (7).

3. The power switching module (1) according claims 1 or 2, wherein the controller (6) is in electrical communication with the plurality of input interfaces (3a - 3d) and the plurality of output interfaces (4a - 4d).

4. The power switching module (1) according to claim 3, wherein the controller (6) is configured to receive a control signal from one of the input interfaces (3a - 3d).

5. The power switching module (1) according to claim 4, wherein the control signal is a communication on power signal.

6. The power switching module (1) according to claim 4, wherein the control signal is a modulated power signal.

7. The power switching module (1) according to claim 6, wherein the modulated power signal is a pulsed frequency signal.

8. A subsea system comprising the power switching module (1) according to any previous claim.

9. A method of retrofitting a subsea system, said subsea system comprising a plurality of power lines connected to respective powered components of the subsea system, with a power switching module (1), said power switching module (1) being received in a marinised canister and comprising a plurality of input interfaces (3a - 3d), a plurality of output interfaces (4a - 4d), a plurality of switches (5a - 5d) connected between respective ones of the input interfaces (3a - 3d) and the output interfaces (4a - 4d), and a controller (6) operable to selectively open and close the switches (5a - 5d), the method comprising the steps of:
i) disconnecting the plurality of power lines from their respective components;
ii) connecting the plurality of power lines to respective ones of the input interfaces (3a - 3d);
iii) providing a plurality of power lines between respective ones of the output interfaces (4a - 4d) and the components of the subsea system; and
iv) connecting the controller (6) to at least one of i) a communications input interface (7) and a communications output interface (8) for a dedicated communications line (11) and ii) in electrical communication with the plurality of input interfaces (3a - 3d) and the plurality of output interfaces (4a - 4d).

10. The method according to claim 9, wherein the controller (6) is configured to receive a control signal from one of the input interfaces (3a - 3d).

11. The method according to claim 10, wherein the control signal is a communication on power signal.

12. The method according to claim 10, wherein the control signal is a modulated power signal.

## Patentansprüche

1. Leistungsschaltmodul (1), wobei das Leistungsschaltmodul (1) Folgendes umfasst:
eine Vielzahl von Eingangsschnittstellen (3a - 3d);
eine Vielzahl von Ausgangsschnittstellen (4a - 4d);
eine Vielzahl von Schaltern (5a - 5d), die jeweils zwischen einer von den Eingangsschnittstellen (3a - 3d) und einer von den Ausgangsschnittstellen (4a - 4d) angeschlossen sind; und
eine Steuerung (6), die zum selektiven Öffnen und Schließen der Schalter (5a - 5d) betätigbar ist,
**dadurch gekennzeichnet, dass** die Steuerung (6) i) mit einer Kommunikationseingangsschnittstelle (7) und einer Kommunikationsausgangsschnittstelle (8) für eine fest zugeordnete Kommunikationsleitung (11) verbunden ist und/oder ii) in elektrischer Kommunikation mit der Vielzahl von Eingangsschnittstellen (3a - 3d) und der Vielzahl von Ausgangsschnittstellen (4a - 4d) steht,
wobei das Leistungsschaltmodul (1) in einem meertauglichen Behälter aufgenommen ist.

2. Leistungsschaltmodul (1) nach Anspruch 1, wobei die Steuerung (6) zum Empfangen eines Steuersignals von der Kommunikationseingangsschnittstelle (7) konfiguriert ist.

3. Leistungsschaltmodul (1) nach Anspruch 1 oder 2, wobei die Steuerung (6) in elektrischer Kommunikation mit der Vielzahl von Eingangsschnittstellen (3a - 3d) und der Vielzahl von Ausgangsschnittstellen (4a - 4d) steht.

4. Leistungsschaltmodul (1) nach Anspruch 3, wobei die Steuerung (6) zum Empfangen eines Steuersignals von einer der Eingangsschnittstellen (3a - 3d) konfiguriert ist.

5. Leistungsschaltmodul (1) nach Anspruch 4, wobei das Steuersignal ein Kommunikation-Ein-Leistungssignal ist.

6. Leistungsschaltmodul (1) nach Anspruch 4, wobei das Steuersignal ein moduliertes Leistungssignal ist.

7. Leistungsschaltmodul (1) nach Anspruch 6, wobei das modulierte Leistungssignal ein Pulsfrequenzsignal ist.

8. Untermeeressystem, das das Leistungsschaltmodul (1) nach einem der vorstehenden Ansprüche umfasst.

9. Verfahren zum Nachrüsten eines Untermeeressystems, wobei das Untermeeressystem eine Vielzahl von Stromleitungen umfasst, die jeweils mit bestromten Komponenten des Untermeeressystems verbunden sind, mit einem Leistungsschaltmodul (1), wobei das Leistungsschaltmodul (1) in einem meerestauglichen Behälter aufgenommen ist und eine Vielzahl von Eingangsschnittstellen (3a - 3d), eine Vielzahl von Ausgangsschnittstellen (4a - 4d), eine Vielzahl von Schaltern (5a - 5d), die jeweils zwischen einer von den Eingangsschnittstellen (3a - 3d) und einer von den Ausgangsschnittstellen (4a - 4d) angeschlossen sind, und eine Steuerung (6) umfasst, die zum selektiven Öffnen und Schließen der Schalter (5a - 5d) betätigbar ist, wobei das Verfahren die folgenden Schritte umfasst:
i) Trennen der Vielzahl von Stromleitungen von ihren jeweiligen Komponenten;
ii) Anschließen der Vielzahl von Stromleitungen an jeweils eine von den Eingangsschnittstellen (3a - 3d);
iii) Bereitstellen einer Vielzahl von Stromleitungen jeweils zwischen einer von den Ausgangsschnittstellen (4a - 4d) und einer von den Komponenten des Untermeeressystems und
iv) Anschließen der Steuerung (6) i) an eine Kommunikationseingangsschnittstelle (7) und eine Kommunikationsausgangsschnittstelle (8) für eine fest zugeordnete Kommunikationsleitung (11) und/oder ii) in elektrischer Kommunikation mit der Vielzahl von Eingangsschnittstellen (3a - 3d) und der Vielzahl von Ausgangsschnittstellen (4a - 4d).

10. Verfahren nach Anspruch 9, wobei die Steuerung (6) zum Empfangen eines Steuersignals von einer der Eingangsschnittstellen (3a - 3d) konfiguriert ist.

11. Verfahren nach Anspruch 10, wobei das Steuersignal ein Kommunikation-Ein-Leistungssignal ist.

12. Verfahren nach Anspruch 10, wobei das Steuersignal ein moduliertes Leistungssignal ist.

## Revendications

1. Module de commutation de courant (1), le module de commutation de courant (1) comprenant :
une pluralité d'interfaces d'entrée (3a - 3d) ;
une pluralité d'interfaces de sortie (4a - 4d) ;
une pluralité de commutateurs (5a - 5d) connectés entre les interfaces d'entrée (3a - 3d) et les interfaces de sortie (4a - 4d) respectives ; et
un dispositif de commande (6) pouvant fonctionner pour ouvrir et fermer de manière sélective les commutateurs (5a - 5d) ;
**caractérisé en ce que** le dispositif de commande (6) est au moins l'un de i) connecté à une interface d'entrée de communication (7) et à une interface de sortie de communication (8) pour une ligne de communication dédiée (11) et ii) en communication électrique avec la pluralité d'interfaces d'entrée (3a - 3d) et la pluralité d'interfaces de sortie (4a - 4d),
dans lequel le module de commutation de courant (1) est reçu dans un bidon marinisé.

2. Module de commutation de courant (1) selon la revendication 1, dans lequel le disopsitif de commande (6) est configuré pour recevoir un signal de commande provenant de l'interface d'entrée de communication (7).

3. Module de commutation de courant (1) selon la revendication 1 ou 2, dans lequel le dispositif de commande (6) est en communication électrique avec la pluralité d'interfaces d'entrée (3a - 3d) et la pluralité d'interfaces de sortie (4a - 4d).

4. Module de commutation de courant (1) selon la revendication 3, dans lequel le dispositif de commande (6) est configuré pour recevoir un signal de commande provenant de l'une des interfaces d'entrée (3a - 3d).

5. Module de commutation de courant (1) selon la revendication 4, dans lequel le signal de commande est un signal de communication de courant.

6. Module de commutation de courant (1) selon la revendication 4, dans lequel le signal de commande est un signal de courant modulé.

7. Module de commutation de courant (1) selon la revendication 6, dans lequel le signal de courant modulé est un signal de fréquence pulsée.

8. Système sous-marin comprenant le module de commutation de courant (1) selon une quelconque revendication précédente.

9. Procédé de réaménagement d'un système sous-marin, ledit système sous-marin comprenant une pluralité de lignes de courant raccordées à des composants alimentés respectifs du système sous-marin, avec un module de commutation de courant (1), ledit module de commutation de courant (1) étant reçu dans un bidon marinisé et comprenant une pluralité d'interfaces d'entrée (3a - 3d), une pluralité d'interfaces de sortie (4a - 4d), une pluralité de commutateurs (5a - 5d) connectés entre les interfaces d'entrée (3a - 3d) et les interfaces de sortie (4a - 4d) respectives, et un dispositif de commande (6) destiné à ouvrir et fermer sélectivement les commutateurs (5a - 5d), le procédé comprenant les étapes consistant à :
i) déconnecter la pluralité de lignes de courant de leurs composants respectifs ;
ii) connecter la pluralité de lignes de courant à des interfaces d'entrée respectives (3a - 3d) ;
iii) fournir une pluralité de lignes de courant entre les interfaces de sortie (4a - 4d) respectives et les composants du système sous-marin ; et
iv) connecter le dispositif de commande (6) à au moins l'un i) d'une interface d'entrée de communication (7) et d'une interface de sortie de communication (8) pour une ligne de communication dédiée (11) et ii) d'en communication électrique avec la pluralité d'interfaces d'entrée (3a - 3d) et la pluralité d'interfaces de sortie (4a - 4d).

10. Procédé selon la revendication 9, dans lequel le dispositif de commande (6) est configuré pour recevoir un signal de commande provenant d'une des interfaces d'entrée (3a - 3d).

11. Procédé selon la revendication 10, dans lequel le signal de commande est un signal de communication de courant.

12. Procédé selon la revendication 10, dans lequel le signal de commande est un signal de courant modulé.
